# DEMANDE DE BREVET EUROPEEN

(11) **EP 1 862 753 A1**
(43) Date de publication de la demande: **05.12.2007**
(21) Numéro de dépôt: 07290658.9
(22) Date de dépôt: 23.05.2007
(51) Int. Cl.: F28F 1/08, F28F 21/06, F28D 1/047, F02M 31/20

(54) **Èchangeur thermique ayant un serpentin en tube annelé**

(30) Priorité: 01.06.2006 FR 0604890
(71) Demandeur: Nobel Plastiques, 78300 Poissy (FR)
(72) Inventeur: Paquis, Yvon, 51300 Vitry-le-Francois (FR); Juttel, Michael, 51100 Reims (FR)
(74) Mandataire: Lavialle, Bruno François Stéphane

(57) **Abrégé**

Echangeur thermique comportant un tube de transport de fluide (10) conformé en serpentin, le tube étant en matériau thermoplastique et comprend au moins un tronçon annelé (12).

Circuit de refroidissement, circuit de carburant et véhicule comprenant un tel échangeur thermique.

## Description

La présente invention concerne un échangeur thermique utilisable notamment dans un circuit de carburant. L'invention concerne également un circuit de refroidissement, un circuit de carburant et un véhicule comprenant un tel échangeur thermique.

### ARRIERE PLAN DE L'INVENTION

Un circuit de carburant, plus particulièrement destiné au gazole, comprend un circuit de retour reliant le réservoir à l'organe de distribution du carburant (par exemple une rampe distributrice) aux injecteurs pour ramener au réservoir le gazole non injecté. Le circuit de retour comprend généralement un échangeur thermique agencé pour abaisser la température du gazole de 125° environ au niveau de l'organe de distribution à 85° environ afin notamment de permettre l'utilisation d'un réservoir en polyéthylène plus léger que les réservoirs métalliques et moins coûteux que les réservoirs en polyamide de meilleure résistance à la température.

L'échangeur thermique comprend un tube de transport du carburant qui est conformé en serpentin et est positionné sous le véhicule pour être soumis à un flux d'air tel que celui engendré par le déplacement du véhicule. Le tube utilisé est actuellement un tube métallique lisse. Le refroidissement obtenu est efficace mais l'utilisation de métal rend l'échangeur thermique relativement lourd.

Pour obvier à cet inconvénient, on a pensé à remplacer le métal constituant le tube conformé en serpentin par un matériau plastique, et plus particulièrement du polyamide.

L'échangeur est ainsi effectivement plus léger mais on constate une baisse de ses performances en refroidissement.

### OBJET DE L'INVENTION

Il serait donc intéressant de disposer d'un échangeur thermique combinant les avantages des refroidisseurs à tube métallique et des refroidisseurs à tube en matériau thermoplastique.

### RESUME DE L'INVENTION

A cet effet, on prévoit, selon l'invention, un échangeur thermique comportant un tube de transport de fluide conformé en serpentin, le tube étant en matériau thermoplastique et comprenant au moins un tronçon annelé.

La présence des annelures permet d'augmenter la surface d'échange entre le tube et l'air qui l'environne et les annelures perturbent le flux d'air et y créent des turbulences. Ces deux phénomènes favorisent l'échange thermique entre le fluide transporté par le tube et l'air environnant le tube.

De préférence, le tube comporte au moins une portion coudée s'étendant au niveau du tronçon annelé.

La disposition du tronçon annelé dans la portion coudée du tube permet de s'affranchir de la phase de cintrage qui était nécessaire pour les tubes métalliques ou de formage en température nécessaire pour les tubes lisses en matériau thermoplastique. La forme de la portion coudée est maintenue par l'intermédiaire des organes de fixation du tube à son support.

L'invention concerne également un circuit de refroidissement et un circuit de carburant comprenant un échangeur ayant l'une au moins des caractéristiques précitées.

Par ailleurs, l'invention concerne un véhicule comprenant une carrosserie et un tel échangeur thermique, dans lequel l'échangeur est fixé à l'extérieur de la carrosserie.

Ainsi l'échangeur thermique est soumis au flux d'air engendré par le déplacement du véhicule. Les annelures perturbent le flux d'air favorisant l'échange thermique entre le fluide transporté et l'air environnant l'échangeur.

D'autres caractéristiques et avantages de l'invention ressortiront à la lecture de la description qui suit d'un mode de réalisation particulier non limitatif de l'invention.

### BREVE DESCRIPTION DES DESSINS

Il sera fait référence aux dessins annexés, parmi lesquels :
- la figure 1 est une vue partielle d'un échangeur thermique conforme à l'invention,

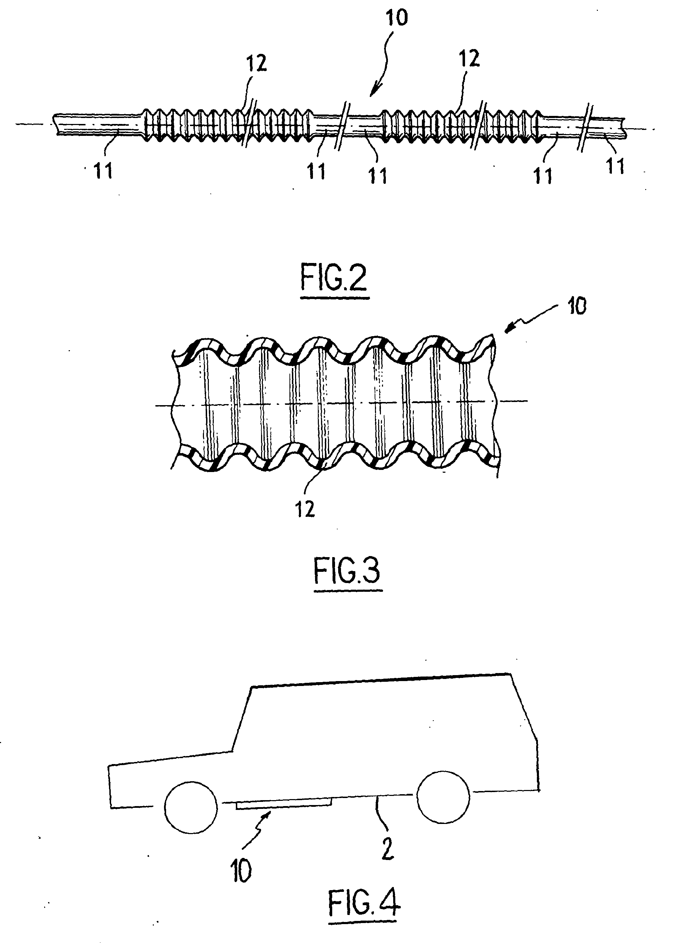

- la figure 2 est une vue de détail du tube constituant cet échangeur,
- la figure 3 est une vue partielle en coupe longitudinale de ce tube,
- la figure 4 est une vue schématique d'un véhicule équipé de l'échangeur thermique de l'invention.

### DESCRIPTION DETAILLEE DE L'INVENTION

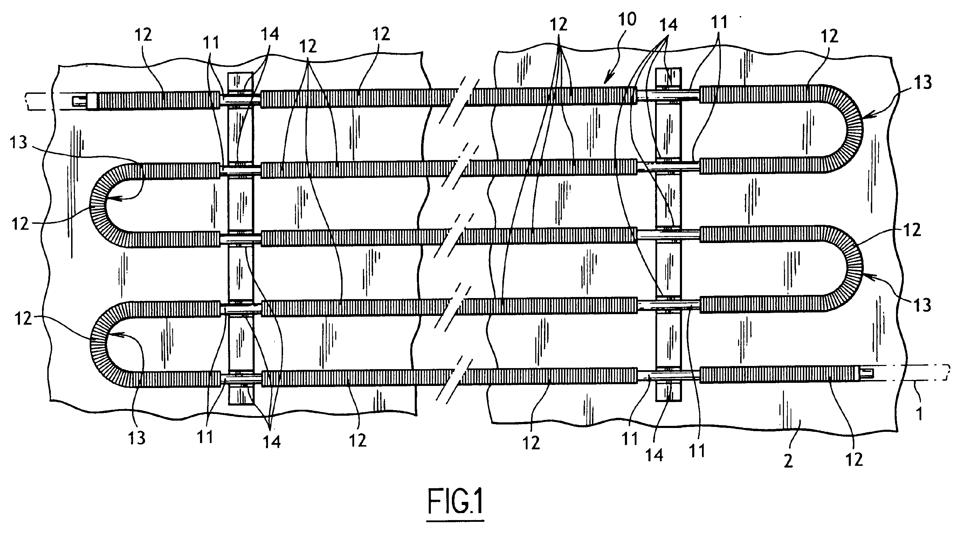

L'échangeur thermique conforme à l'invention est ici destiné à être implanté dans un circuit de retour de gazole dont des canalisations sont représentées en trait mixte et avec la référence 1 sur la figure 1, et est fixé sous la carrosserie 2 d'un véhicule automobile.

L'échangeur thermique conforme à l'invention comprend un tube, généralement désigné en 10, comprenant une succession de tronçons lisses 11 et de tronçons annelés 12. Le tube 10 est réalisé en matériau thermoplastique, ici un polyamide et plus particulièrement un polyamide 12. Le tube peut cependant être réalisé en d'autres matériaux thermoplastiques, sous forme monocouches ou multi-couches.

Le raccordement du tube 10 au circuit de retour 1 est ici assuré par des embouts de type à dent de sapin ou à tétine; D'autres moules de raccordement sont bien entendu envisageables.

Le tube 10 est conformé en serpentin, de sorte qu'il présente des portions coudées 13. Ces portions coudées sont formées au niveau des portions annelées 12. Des organes de fixation 14, connus en eux-mêmes et par exemple du type de ceux communément appelés agrafes, relient les tronçons lisses 11 à la carrosserie 2 du véhicule. Les organes de fixation 14 servent d'une part à fixer le tube 10 à la carrosserie 2 et d'autre part à maintenir en forme les portions coudées 13.

La longueur du tube 10 et sa conformation en serpentin (nombre de portions coudées), ainsi que sa disposition sur le véhicule, permettent d'adapter la dissipation thermique procurée par l'échangeur aux besoins de l'application.

Les annelures peuvent avoir une forme différente de celle représentées sur les figures, et par exemple une forme en hélice ou avoir une section sensiblement sinusoïdale, triangulaire, en créneau...

Bien entendu, l'invention n'est pas limitée au mode de réalisation décrit et on peut y apporter des variantes de réalisation sans sortir du cadre de l'invention tel que défini par les revendications.

De manière facultative, il est possible de fixer le tube conformé en serpentins sur une plaque qui peut assurer à la fois une fonction de protection du tube et une fonction de déflecteur pour diriger le flux d'air vers le tube, le tube s'étendant alors entre la carrosserie et la plaque.

L'échangeur est par exemple destiné à être fixé sous la caisse d'un véhicule ou à tout autre endroit dans lequel l'échangeur est soumis à un flux d'air.

D'autres applications sont également envisageables et notamment des applications statiques, aux fins de réchauffage ou de refroidissement, ...

Le tube peut être réalisé en une ou plusieurs pièces.

L'invention n'est pas limitée au circuit de carburant mais concerne également par exemple un circuit de refroidissement monté sur un véhicule ou sur un autre dispositif. Le circuit décrit peut ainsi être utilisé comme circuit de refroidissement dans une autre application.

## Revendications

1. Echangeur thermique comportant un tube de transport de fluide (10) en matériau thermoplastique conformé en serpentin, **caractérisé en ce que** le tube comprend au moins un tronçon annelé (12).

2. Echangeur thermique selon la revendication 1, dans lequel le tube (10) comporte au moins une portion coudée (13) s'étendant au niveau du-tronçon annelé (12).

3. Echangeur thermique selon la revendication 1, dans lequel le tube (10) comprend une succession de tronçons annelés (12) et de tronçons lisses (11).

4. Echangeur thermique selon la revendication 3, dans lequel des organes de fixation (14) du tube à un support sont montés sur les tronçons lisses (11).

5. Circuit de refroidissement comprenant des canalisations (1) connectées à un échangeur thermique (10) selon l'une quelconques des revendications 1 à 4.

6. Circuit de carburant comprenant des canalisations (1) connectées à un échangeur thermique (10) selon l'une quelconques des revendications 1 à 4.

7. Véhicule comprenant une carrosserie (2) et un échangeur thermique (10) selon l'une quelconque des revendications 1 à 4, l'échangeur thermique étant fixé à l'extérieur de la carrosserie.

8. Véhicule selon la revendication 7, dans lequel l'échangeur thermique (10) est fixé sous la carrosserie (2).
